# EUROPEAN PATENT APPLICATION

(11) **EP 2 280 580 A1**
(43) Date of publication of application: **02.02.2011**
(21) Application number: 09164761.0
(22) Date of filing: 07.07.2009
(51) Int. Cl.: H04W 84/18, G06K 19/07

(54) **Data transfer with wirelessly powered communication devices**

(71) Applicant: Nokia Corporation, 02150 Espoo (FI)
(72) Inventor: Jantunen, Joni, 00500, Helsinki (FI); Kaaja, Harald, 04430, Järvenpää (FI); Boldyrev, Sergey, 01150, Soderkulla (FI); Kössi, Jouni, 02170, Espoo (FI); Arponen, Jarmo, 02320, Espoo (FI)
(74) Representative: Lamberg, Samu Petteri

(57) **Abstract**

In a system comprising one or more reader devices and a plurality of wirelessly powered communication devices, the reader device has a transceiver to transmit a wireless signals to scan proximate wirelessly powered communication devices. The reader device also establishes communications with a proximate wirelessly powered communication device, forms a session with the proximate wirelessly powered communication devices, communicates in the session with the wirelessly powered communication device, and maintains a state of the session.

## Description

### TECHNICAL FIELD

The present invention generally relates to data transfer with wirelessly powered communication devices.

### BACKGROUND ART

Electronics has rapidly advanced in a number of areas capable of enabling entirely new types of practical applications. Not only has the processing become enormously faster and more power efficient than before, but also the memories and radio communications have developed with leaps such that new opportunities for useful implementations arise with an increasing pace.

Radio Frequency Identification (RFID) is an example of relatively new technologies that is experiencing a change of generation thanks to development in both communications and memory technologies. Originally, RFID was intended to provide an inexpensive, remotely readable tag that basically functions as a remotely readable bar code with a small memory to hold for example the identity of the tag. The tag comprised a small persistent memory with a unique identity (ID) corresponding to a code represented by the bar code system. For remote reading, a wireless transponder was provided to send the ID when receiving suitable radio transmission powering the transponder. Recently, faster radio powered communication technologies have been developed and the new memories enable storing of more than just some bytes of data.

### SUMMARY

Various aspects of examples of the invention are set out in the claims.
According to a first example aspect of the invention there is provided a method comprising:
establishing communications with a proximate wirelessly powered communication device;
forming a session with the proximate wirelessly powered communication device;
communicating in the session with the wirelessly powered communication device; and
maintaining a state of the session.

The method of the first aspect may be performed in a reader device.

The reader device may be a portable reader device.

The portable reader device may comprise a mobile telecommunications circuitry configured to enable placing mobile telephone calls.

The wireless powering may comprise transmitting wirelessly energizing signals. The wirelessly energizing signals may be selected from a group consisting of radio signals; multi-band short range radio communication signals; near field communication signals; ultrasound signals; audible sound signals; infrared signals; visible light signals; and electromagnetic signals.

The forming of the session may comprise storing a set of session parameters for the duration of the session.

The maintaining of the state of the session may comprise updating the session parameters when a session parameter changes.

The session parameters may comprise one or more parameters selected from a group consisting of:
session identity, device identity of the wirelessly powered device, security level indication, session log indicative of transactions carried during the session, direction of transfer of a transaction, address space accessed in a transaction, and pointer to current address.

The method may further comprise transmitting a wireless signal to detect proximate wirelessly powered communication devices.

The method may further comprise suspending of the session.

The suspending of the session may be carried out intentionally.

The method may be performed in a user device operable by a user. The user device may operate according to an application.

The session may be suspended responsive to any one of the following: a suspend request from the user; suspend request from the application; and battery level of the user device meeting a predetermined low limit.

The suspending of the session may occur responsive to losing connection with the wirelessly powered communication device.

The method may further comprise terminating the session responsive to meeting a termination trigger. The termination trigger may involve any one of the following: a predetermined time has lapsed since the start of the session; predetermined time has lapsed since latest data transfer in the session; predetermined time has lapsed since losing the connection used in the session; detecting a termination request from the user; detecting a termination request from the application; detecting that the battery level of the user device is falling to a predetermined low limit; determination of current location outside a predetermined location area; reaching a maximum number of active sessions; and metadata of content linked to session indicates a need to terminate the session.

The method may further comprise maintaining a main state machine that maintains the state of the session. The maintained state may be selected from a group consisting of: scanning of wirelessly powered communication devices; resuming of a session with a wirelessly powered communication device; ongoing transfer of data in a session with a wirelessly powered communication device; suspended session with a wirelessly powered communication device; and terminated session with a wirelessly powered communication device.

The method may further comprise maintaining a session identity for each ongoing session. The session identity may be compared to a list of valid sessions and if a match is found, the session may be validated. The validating of the session may be used as a criterion to decide whether to perform one of the following: resume the session; suspend the session; and terminate the session.

A reader device may forward the information related to the session over an out-of-band connection to other reader devices.

The out-of-band connection may be a cellular connection, Bluetooth connection, or an Infrared connection.

According to a second example aspect of the invention there is provided an apparatus comprising:
a transceiver configured to transmit a wireless signal to scan proximate wirelessly powered communication devices;
a processor configured to cause the apparatus to:
   establish communications with a proximate wirelessly powered communication device;
   form a session with the proximate wirelessly powered communication device;
   communicate in the session with the wirelessly powered communication device; and
   maintain a state of the session.

The apparatus may be configured to obtain operating power at least for the transceiver from a proximate wirelessly powering communication device.

The forming of the session may comprise storing a set of session parameters for the duration of the session.

The maintaining of the state of the session may comprise updating the session parameters when a session parameter changes.

The session parameters may comprise one or more parameters selected from a group consisting of: session identity, device identity of the wirelessly powered device, security level indication, session log indicative of transactions carried during the session, direction of transfer of a transaction, address space accessed in a transaction, and pointer to current address.

The processor may further be configured to cause the apparatus to suspend the session responsive to any one of the following: a suspend request from a user; suspend request from an application that uses the method of the first aspect; battery level of a user device running the method of the first example aspect meeting a predetermined low limit; and losing connection with the wirelessly powered communication device.

The processor may further be configured to cause the apparatus to terminate the session responsive to meeting a termination trigger.

The termination trigger may involve any one of the following: a predetermined time has lapsed since the start of the session; predetermined time has lapsed since latest data transfer in the session; predetermined time has lapsed since losing the connection used in the session; detecting a termination request from the user; detecting a termination request from the application; detecting that the battery level of the user device is falling to a predetermined low limit; determination of current location outside a predetermined location area; reaching a maximum number of active sessions; and metadata of content linked to session indicates a need to terminate the session.

The maintained state may be selected from a group consisting of: scanning of wirelessly powered communication devices; resuming of a session with a wirelessly powered communication device; ongoing transfer of data in a session with a wirelessly powered communication device; suspended session with a wirelessly powered communication device; and terminated session with a wirelessly powered communication device.

The processor may further be configured to cause the apparatus to maintain a session identity for each ongoing session.

The session identity may be contained in at least a portion of one or more of the following messages:
- session setup-messages;
- session maintenance messages;
- communication link management messages;
- data transfer messages;
- flow control messages;
- session suspension messages; and
- session termination messages.

The apparatus may forward the information related to the session over an out-of-band connection to other apparatuses.

The out-of-band connection may be a cellular connection, Bluetooth connection, or an Infrared connection.

According to a third example aspect of the invention there is provided a computer program comprising computer executable program code configured to cause when executed by a computing device:
transmitting a wireless signal to scan proximate wirelessly powered communication devices;
establishing communications with a proximate wirelessly powered communication device;
forming a session with the proximate wirelessly powered communication device;
communicating in the session with the wirelessly powered communication device; and
maintaining a state of the session.

According to a fourth example aspect of the invention there is provided a computer readable memory medium, wherein in the memory medium there is recorded the computer program of the third example aspect of the invention.

According to a fifth example aspect of the invention there is provided an apparatus comprising:
transceiver means for transmitting a wireless signal to scan proximate wirelessly powered communication devices;
means for causing the apparatus to:
   establish communications with a proximate wirelessly powered communication device;
   form a session with the proximate wirelessly powered communication device;
   communicate in the session with the wirelessly powered communication device; and
   maintain a state of the session.

According to a sixth example aspect of the invention there is provided an system comprising:
an apparatus according to the second example aspect of the invention; and
a first wirelessly powered communication device capable of forming a session with the apparatus according to the second example aspect of the invention.

The system may further comprise a second wirelessly powered communication device capable of forming a session with the first wirelessly powered communication device.

The second wirelessly powered communication device may comprise a processor configured to control the operation of the second wirelessly powered communication device. The processor may be configured to cause the second wirelessly powered communication device to establish a communication session with the first wirelessly powered communication device using the apparatus as a proxy to relay state related information between the first and second wirelessly powered communication devices. The second wirelessly powered communication device may be configured to transfer data directly with the first wirelessly powered communication device.

According to a seventh example aspect of the invention there is provided an apparatus comprising;
a transceiver configured to obtain operating power from received wireless signals;
a processor configured to control the operation of the apparatus, the processor being configured to cause the transceiver to establish communications with a proximate wireless communication device;
the processor being further configured to cause the apparatus to form a session with the proximate wireless communication device and to exchange with the proximate wireless communication device a session identifier, the session identifier identifying said session; and
a memory configured to maintain the session identifier.

The wireless communication device may be configured to communicate using power obtained from proximately transmitted wireless signals.

The wireless signals may be received from a proximate transmitter.

The wireless communication device may be configured to radiate wireless signals in order to power proximate communication devices that are configured to communicate using power obtained from proximately transmitted wireless signals. The processor may be configured to check whether there is a suspended session with the proximate wireless communication device and, if yes, the forming of the session comprises resuming of the suspended session and, if no, the forming of the session comprises establishing a new session with the proximate wireless communication device.

The apparatus and the wireless communication device may be configured to communicate directly with each other. Alternatively, or additionally, the apparatus and the wireless communication device may be configured to communicate directly with each other via a proxy device. The proxy device may be a wireless communication device that is configured to radiate wireless signals in order to power proximate communication devices that are configured to communicate using power obtained from proximately transmitted wireless signals.

The apparatus may further be configured to maintain state of the session.

According to an eighth example aspect of the invention there is provided a method comprising;
obtaining operating power at least for communications from wireless signals;
establishing communications with a proximate wireless communication device;
forming a session with the proximate device and exchanging with the proximate wireless communication device a session identifier, the session identifier identifying said session; and
maintaining the session identifier.

According to a ninth example aspect of the invention there is provided a computer program stored in a computer readable memory medium, the computer program comprising computer executable program code configured to cause a, when executed by a computer, the computer to:
obtain operating power for communications from wireless signals;
establish communications with a proximate wireless communication device;
form a session with the proximate device and receive a session identifier, the session identifier identifying said session; and
maintain the session identifier.

Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:
- Fig. 1: shows a schematic drawing of a system according to an example embodiment of the invention;
- Fig. 2: shows an example graphical presentation on power and maximum data rate of radio powered communication units as a function of distance;
- Fig. 3: illustrates some basic processes as a cascade according to an example embodiment of the invention;
- Fig. 4: shows a flow chart illustrating operation of a reader device when scanning and selecting proximate wirelessly powered communication units, according to an example embodiment of the invention;
- Fig. 5: illustrates an example process for resuming a session between a reader device and a tag according to an example embodiment of the invention;
- Fig. 6: illustrates an example process for performing data transfer in a session between a reader device and a tag according to an example embodiment of the invention;
- Fig. 7: illustrates an example process for suspending a session between a reader device and a tag according to an example embodiment of the invention;
- Fig. 8: illustrates an example process for terminating a session between a reader device and a tag according to an example embodiment of the invention;
- Fig. 9: illustrates different states maintained by an access management server according to an example embodiment of the invention;
- Fig. 10: illustrates an exemplary block diagram according to an example embodiment of the invention;
- Fig. 11: illustrates an example embodiment for an access management server memory address space architecture;
- Fig. 12: shows an example process of forming or resuming a session with a proximate communication device according to an example embodiment of the invention; and
- Fig. 13: shows an example of a session log according to an example embodiment of the invention.

### DETAILED DESCRIPTION

In the following description, like numbers denote like elements.

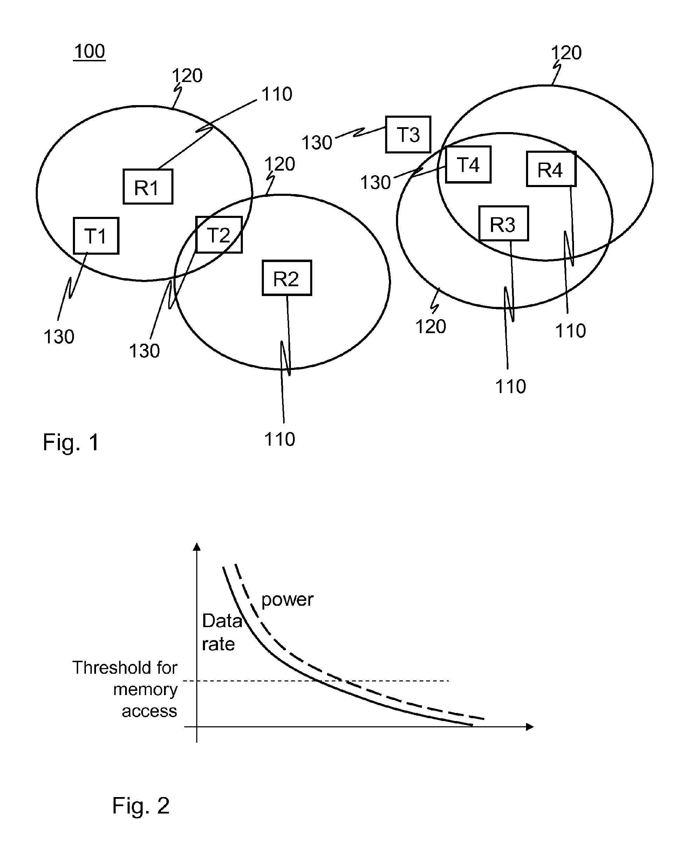

An example embodiment of the present invention and its potential advantages are understood by referring to Figs. 1 through 11 of the drawings.

Fig.1 shows a schematic drawing of a system 100 according to an example embodiment of the invention. The system comprises a number of reader devices 110 capable of wirelessly powering and communicating with proximate wirelessly powered communication units or tags 130 within a range 120. The reader devices may be, for instance, configured to radiate wireless powering signals and to communicate with tags on another frequency band or to perform the powering and communication on a common frequency band. The reader device is not, however, typically solely configured to read information wirelessly from proximate tags, but also to write information to the tags. However, due to evolution from radio frequency identification technology, the term reader is commonly used in systems in which a device powers and accesses surrounding tags with radio signals. Also the term tag is used as a shortcut to refer to any type of a device that can communicate using the radio communication technology that is used. The reader device 110 itself may be capable of operating as a tag, that is, receiving the power needed for communication from radio signals.

Fig. 1 illustrates that there may be a number of tags, some of which are not accessible to any reader device (e.g. tag labeled as T3) while some tags may reside within coverage/range of one or more different reader devices. Moreover, some tags may be proximate to one another (tags T3 and T4) and some reader devices may similarly be proximate to one another (R3 and R4). Hence, a number of different communication devices (either tags or readers) may be connectable with different other communication devices in a quickly varying manner. Namely, the communication range between two communication devices depends on their radio circuitry properties (such as sensitivity etc.), radio transmission strength, directionality of transmission, blockage and interference, among others. In Fig. 1 it is assumed that each range is an ideal circle of equal size i.e. that the antennas are perfectly omni-directional and that the radio circuitries in different tags match with one another by radio properties and that the reader devices are also identical in terms of their radio properties. The coverage/range may be in some applications only few millimeters, some centimeters or up to ten or tens of meters. However, there is typically a steep decline in communication speed in radio signal powered communications as a function of increasing distance such that reasonably fast access may be economically difficult to achieve over distances greater than half a meter, for instance. The impact on distance on the communication speed is also illustrated in Fig. 2 that shows two example curves, one for the power level provided as a function of distance and another for a maximum data rate as a function of distance (assuming constant radio conditions).

It should be appreciated that in the system 100, when the ranges are of a scale less than one meter and data rates of a magnitude of megabits per second and more, it is possible to relatively quickly exchange information enough to transfer far larger amounts of data than with ordinary radio frequency identification (RFID) has been targeted to transfer. On the other hand, it is also clear that the data transfers are very volatile: if the reader device and communicating tag are distanced by even short a distance, the communication may stop. This may happen very easily, if the reader device is a portable device or generally mobile device. For instance, a mobile phone is a good platform for hosting the reader device 110. Assume that the user is storing pictures to a photo repository in the living room by placing the phone next to the television (that hosts the photo repository). Then, a short message or phone call arrives and the user picks the phone - and the connection is lost. Or, the user walks in an arts gallery or shop and receives presentations of different items from their tags when she places her reader device on or proximate (e.g. couple of centimeters) from the tag. The user then picks a hand kerchief of changes the device to another hand, not willing or able to concentrate on keeping the reader device constantly at an optimal location. In result, the connection breaks. The connection can be automatically established again, but the user would not be happy to start anew watching for a presentation of a painting or television set. Instead, the presentation should continue from where it was left. The user's reader device would maintain a timing pointer that indicates a location in a source data from which the playback is continued so that by reloading the data, the playback can be continued. In an embodiment of the invention, a session is created between communicating devices to enable suspending and continuing of data transfer again if necessary. Hence, when a new communication link is re-established, it is not necessary to fetch all the data from the scratch and even volatile links may be used for transferring relatively large amounts of data.

The constitution of sessions is next considered with some examples. To start with the term session itself, the session may be understood as a given set of transactions.

The control of a session may employ the following basic commands:
- Set-up, terminate, suspend, resume, list sessions, list parameters
- Additional delay command is a parameter of suspend command
- No resume required i.e. delay command = auto-resume
- Suspend of a session may occur through voluntary or non-voluntary reasons

The status and features of a session may be defined with parameters such as:
- Simplest case: session ID, optional device IDs
- Security level: unprotected / encrypted
- Session log: what (transactions) have been done earlier in the session
- Reader may store the log also to the tag during termination to allow access of login data to other readers
- Can be used to fix the session data structure (that describes everything about the tag, a superset of file system and others) so as to return a tag from an unstable state to a stable state.
- The log may also contain for the transactions the following parameters: Direction of transfer (R/W), address space accessed, pointer to current address (status).
Reasons for expiration of a (suspended) session i.e. for deletion of a session:
- Time passes a predetermined expiry time, location changes out of predefined session maintenance area, maximum number of active sessions is reached and/or metadata of content linked to session indicates a need to terminate the session. Moreover, the session may be terminated when battery level of the reader meets a predetermined lower limit.

The user may be taken into account by using a user interface to receive instructions from a user e.g. if a pending session is detected during connection set-up
- "Resume = YES / NO ?", reader may have some intelligence when resume is asked from the user interface. For instance, the reader may be configured to remember particular tags or circumstances in which no confirmation is to be prompted and/or what action should be taken by default.

When a session has expired or the relevant transactions have been completed, the session host may release allocated memory. Such a release may be entirely harmless to the tag e.g. if the tag maintains its own file system or if the session has only been used for reading data from the tag. Otherwise, before releasing the memory, the reader device may attempt to update the tag's data structures so as to avoid loss of data or causing instability of the tag. For example, the file-system in the tag may be updated only after the transaction is completed.

It is appreciated that a reader device may have multiple ongoing logical connections with separate session IDs with one or more tags. The data transfer in the different sessions may be substantially independent of other sessions i.e. the sessions may be in different phases, and the reader may switch between the different logical connections by activating, pausing, resuming and delaying of the different sessions correspondingly.

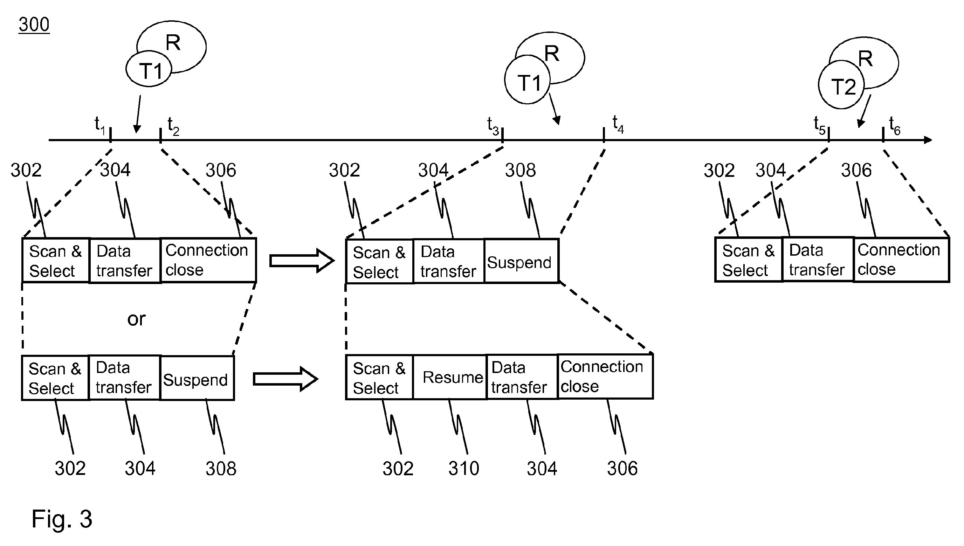

Fig. 3 illustrates some basic processes as a cascade 300 according to an example embodiment of the invention. A non-linear time line is provided to show order of events without any intended illustration of the duration of individual events. At a first moment of time, denoted as t₁, two different alternatives are shown as adjacent branches, each commencing with an event 302, scan and detect proximate wirelessly powered communication units or tags 130. Next, in the upper branch illustrative of a scenario of a complete communication session, data transfer 304 takes place between the tag 130 and a reader device 110 accessing the tag 130 (denoted in Fig. 3 as T1 and R1 for tag 1 and reader 1). After the data transfer 304, the connection between the reader and the tag is closed 306. In the lower branch, instead of connection closing, there is suspending 308 of the connection. The suspending may occur either intentionally or because of abrupt loss of connection.

After the first group of events, there may be a pause of some seconds, minutes or even hours before the same reader and tag are brought into each others' proximity again. In case of completed session, the process continues with scan and select 302 followed by data transfer 304. However, in case of a suspended session, the scan and select event 302 is followed by resuming 310 of the suspended session and then by data transfer 304 to transfer remaining data in the suspended session. If the data transfer is completed, the next event is closing of the connection 306. Otherwise, if the data transfer is suspended, connection is lost or the data rate on an existing connection drops below a given limit, the session is suspended 308. Either one of these outcomes may follow the data transfer, regardless whether there has been one or more suspensions before in that session.

Finally, there is shown one further group of events illustrative of bringing the reader and another tag in proximity of each other. In this case, scan and detect 302 result in the reader finding the another tag, data may be transferred 304 with the another tag, and if the data transfer is completed, a connection close 306 occurs. It is appreciated that there is no data transfer with all the tags that are found in the scan and detect 304. Instead, it may be decided by applications and / or by the user of the reader device 110 whether data is to be transferred with a particular tag 130. It is also appreciated that the communication with one tag may occur between or during communications with another tag. To this end, the individual communication sessions may be distinguished from one another and corresponding states be maintained by an involved communication unit.

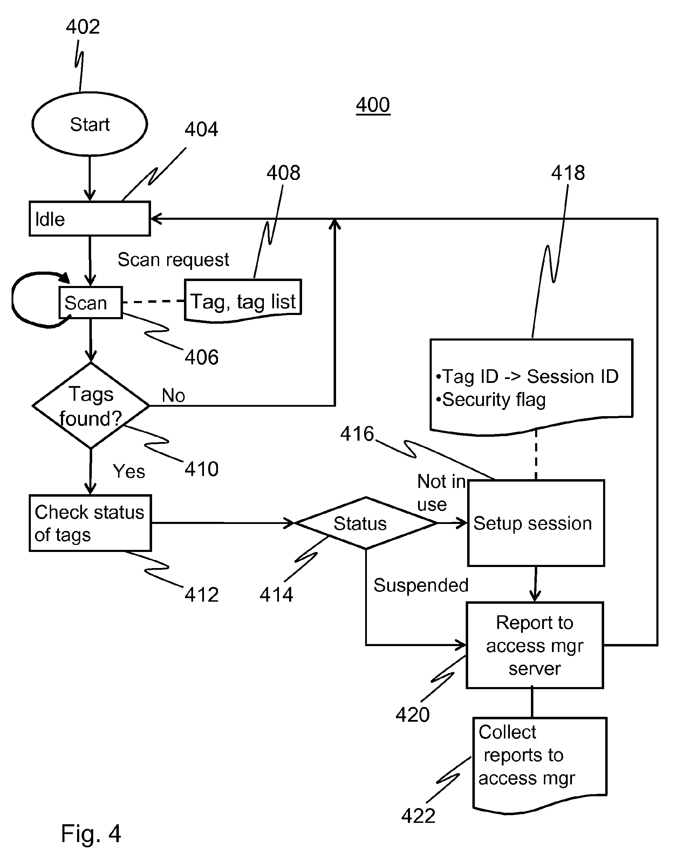

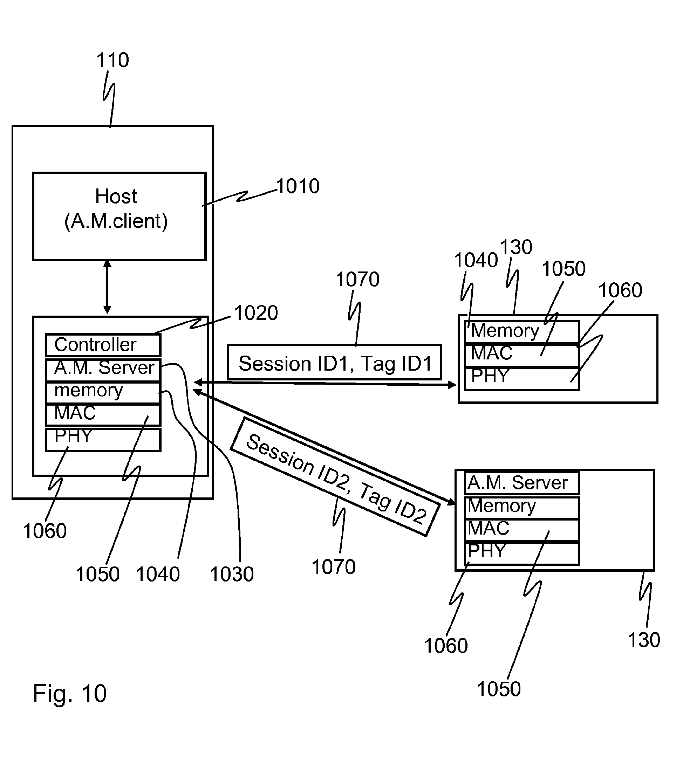

Fig. 4 shows main signaling according to an example embodiment of the invention. The process starts from step 402 in which the reader device 110 is started or brought to a particular location. The reader device 110 performs, at least when wirelessly powered communications is enabled, recurring scanning for proximate wirelessly powered communication devices such as tags 130. It helps the understanding of this description to assume that the reader device is a portable device with a radio transceiver and with an access management server that maintains states related to communications with different tags. The reader device may also comprise software that makes use of the radio communications and that implements an access management client. Also the tags may comprise a radio transceiver part for communicating with the reader device and software that implements the access management server (and client). The access management server and client are terms used here for a service that maintains the states of communications and to software that interfaces with applications of a radio communication device, see for example Fig. 10 and related description for further description of example structures of the reader devices and wirelessly powered communication devices usable in particular example embodiments of the invention. The access management server may comprise a main state machine that maintains the main states of operation and the access management server may further comprise a number of sub-states which relate to individual events or transactions within a larger procedure (such as session setup or resume). It is appreciated that it is not essential to implement separate access management client and server; this is but one embodiment of the invention that may enable simple construction and adaptation of the operation of different devices according to particular embodiments of the invention. Conceptually, it may be thought that a client requests for services from a server and the server maintains its internal states corresponding to different transactions that occur while the service requested by the client is being provided or organized by the server.

The reader device 110 may idle most of the time and after start 402 the process advances to step 404, idling. At this step, the reader device may process various other processes, but with regards to the wirelessly powered communications the reader device is idle for time being. The process then advances to step 406 in which the reader device 110 scans for surrounding tags. The reader device maintains a tag list 408 with identities of accessible tags and consults this list when receiving responses from proximate tags. Then, it is checked 410 if tags have been found. If no, the process resumes to idle 404, otherwise the status of found tags is being checked 412. At this phase, found tags may determine whether to deliver requested status information to the reader device. For instance, some tags may be configured to require given level of privileges before providing any status information for security reasons. If the status information is received, it is checked in step 414 whether there was an existing suspended session with the tag in question or not. If the status information is not received, the reader device may assume that no suspended session exists and proceed to setup 416 of a session. Also if the status information is received and indicates that no suspended session remains between the tag and the reader device, then the process advances to setup step 416. In session setup 416, the reader device assigns 418 a session identity to the commencing session with the tag and also optionally associates a particular security flag with the session indicative of whether the communications should be cryptographically secured, or if unsecured session should be changed to secured mode after involuntary suspension of the session. Namely, in an example embodiment, the session is changed to secured mode after an involuntary suspension of the session has occurred. Next, the process continues to step 420. If a suspended session existed, then no session setup is performed but the process advances to step 420. In step 420, the state of communication session (whether resumed from suspended session or created a new session) is reported 420 to a main state-machine of access management server that collects 422 such reports concerning various tags and reports to the main state-machine of the access management client.

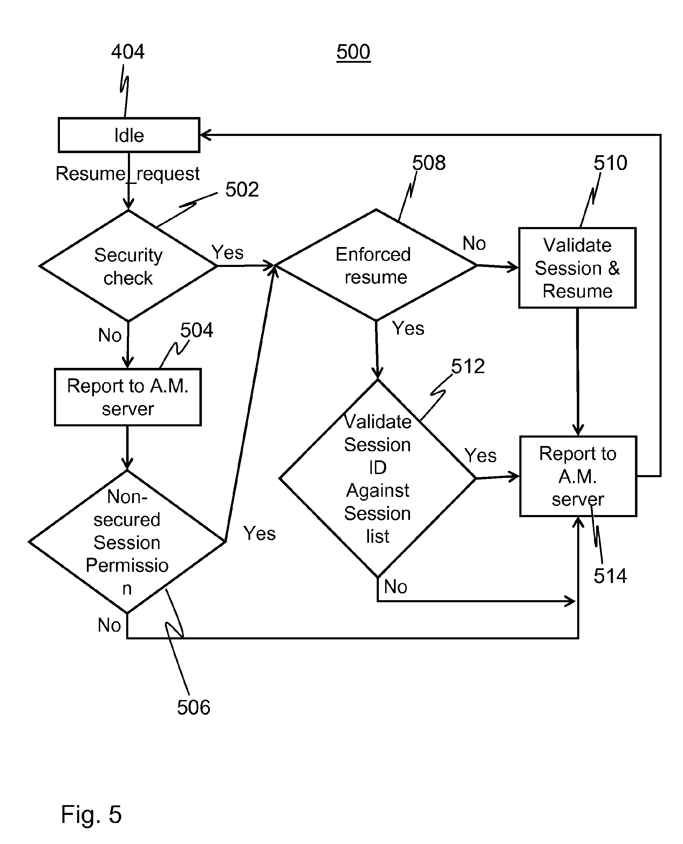

Fig. 5 illustrates an example process for resuming a session between a reader device and a tag according to an example embodiment of the invention. The process starts from idle 404. A resume request is detected and the process continues to step 502 for a security check. In this security check, the access rights of the reader device may be checked and need for a secured session may be detected. It may also be checked whether the tag being accessed should incorporate particular security measures. If a secure session is to be resumed, the process jumps to step 508, otherwise the outcome is reported 504 to main state-machine of the access management server. Next, it is checked 506 if the reader device has a permission from the tag to resume a non-secured session. If yes, the process goes on from step 508 or otherwise the process jumps to step 514 to report the status to the main state-machine of access management server. In step 508 it is checked if an enforced resume is to be performed. That is, if the reader device 110 has administration rights, the reader device may override any suspended sessions and gain access possibly unrestricted rights to accessing the tag 130 and the operation continues to step 512. In case that the reader device has no administration rights, the operation proceeds to step 510 to validate the session and resume pending data transfer after which the process would advance to step 514, reporting to the main state-machine of the access management server. However, if the reader device was performing the enforced resume, the session ID may be validated against a session list. In this stage, a set of special cases may be covered in termination mode, such as:
- sessions takeover (i.e. with enough privilege to handle also the other session that was not our session)
- fixing a session of another (in maintenance mode). Fix the tag based on a session log
- YES = session is found from the list resulting in resuming with different credentials and higher access rights
- NO= conflict on the level of credentials, no sufficient access rights to resume this session, the session can be closed

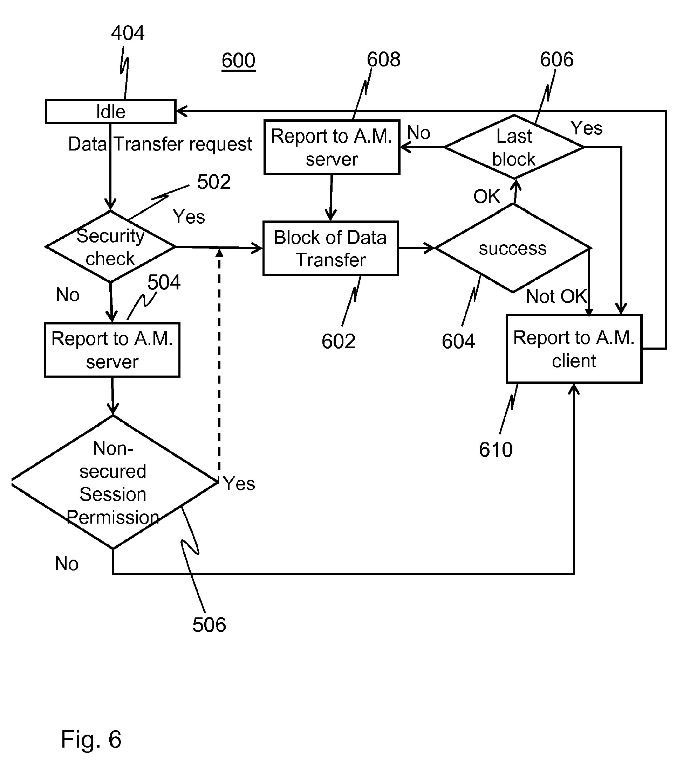

Fig. 6 illustrates an example process for performing data transfer in a session between a reader device and a tag according to an example embodiment of the invention. The process starts from step 404 wherein the reader device is in the idle mode in proximity of the tag with which a session has been established. When a data transfer request is received (e.g. from the user or an application of the reader device), the process continues to a security check 502 as in Fig. 5 after which there may follow steps 504 and 506 as in Fig. 5. If the security check 502 results in positive determination, a secure data is started in blocks of data (602). Next, it is checked 604 if the transfer of the block was successful. If yes, then it is checked if the transferred block was the last block of requested data transfer. If yes, the process proceeds to reporting 610 to the main state-machine of the access management client, otherwise the process returns to transferring a next block of data in 602 via a step 608 of reporting to the main state-machine of the access management server.

It is appreciated that the data transfer may take place in units of one data transfer block and that by following the success of each block transfer, the reader device may maintain flow control with such a resolution.

It is also appreciated that the data transfer may occur in a (cryptographically) secured session or in a non-secured session. A non-secured session may avoid overheads caused by encryption and the short ranges may help in sufficiently avoiding undesired illegal interception of the communications. Moreover, in some applications the content being transferred is completely harmless so that it does not even matter if a stranger were able to listen to the traffic between the tag and the reader device.

It is still further useful to understand that some tags may be built very simple such that they do not even have capability to maintain a file system. Instead, the reader device may fetch a file allocation table from a tag, determine which memory areas to read (and/or write) and then perform the transfer and if necessary update the file allocation table. Hence, the transfer of data blocks may involve the reader device requesting for contents of specific memory areas of the tag.

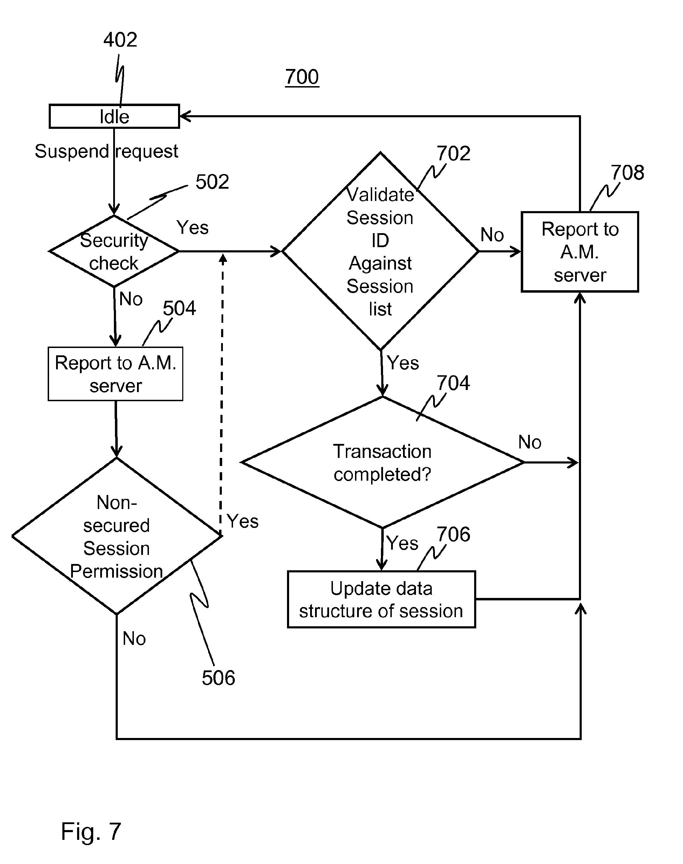

Fig. 7 illustrates an example process for suspending a session between a reader device and a tag according to an example embodiment of the invention. The suspend function may be triggered for many different reasons one being the access management client requesting for termination of the session. Alternatively, a suspend request may be generated by the access management client due to voluntary or involuntary basis. Voluntary suspension may occur for example due to another high-priority multi-radio function or computing process, and involuntary suspension may occur for example due to a lost connection, respectively. Again, the process involves steps 402 to 506. After availability of a permission for either secured or non-secured session has been detected (502, 506), the session is validated by the session ID against a session list maintained by the reader (but a copy may be also stored into the tag). If the validation fails, the suspension process fails and a report to the main state-machine of the access management server is sent 708 and then the process resumes to the idling 402. It is appreciated that the access management server may signal the result of the suspend request back to the access client. Otherwise, it is checked in step 704 if the transaction is completed successfully. If yes, the data structure of the session is updated 706 correspondingly and it is proceeded to step 708. Otherwise, the process continues to step 708.

The reader device 110 may be configured to further collect and analyze information concerning session suspensions. For instance, the reader may identify particular tags as faulty tags if sessions with these tags are particularly prone to suspensions. Alternatively, or additionally, the reader device may determine particular parameters related to using the tag with which the reader is communicating. Such determined parameters like the number of transactions in one session or scheduling parameters of sessions, the number of faulty sessions with the tag; and/or indication of a faulty tag may be stored in the tags in question when the reader device.

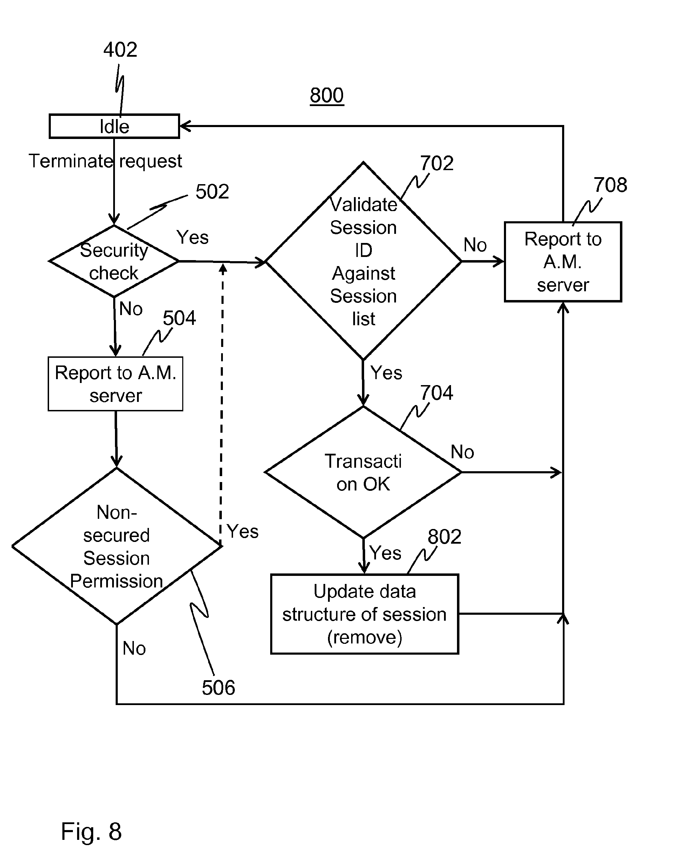

Fig. 8 illustrates an example process for terminating a session between a reader device and a tag according to an example embodiment of the invention. The process starts from idling 402, advances to security check 502 when a terminate request is received from an application or user of the reader device, and then proceeds as with the suspending case, but carrying forward the indication that it is desired to terminate the session. Finally, after step 704, if the transaction completes successfully, the data structure of the session is updated 802 by updating data related to the transaction in the data structure. Then the outcome is reported to the main state-machine of the access management server in step 708 and idling 402 is continued.

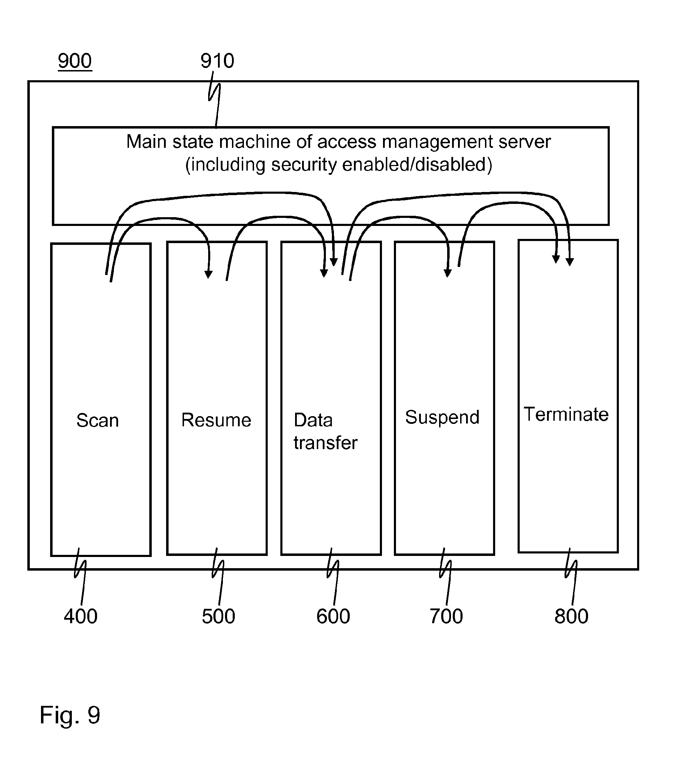

Fig. 9 illustrates different states maintained by an access management server 900 according to an example embodiment of the invention. The access management server 900 may be a functionality provided by the reader device 110. The functionality may be provided, for instance, by software and/or adapted hardwired circuitry. Fig. 9 shows a main state machine 910 and various sub-states in which the state machine may be and normal transitions between the states. Each transition may be recorded in the main state machine. The state transitions may be requested based on the reports described by the state-diagrams of sub-states and requests arriving from the access management client. Some or all of the reports generated in the sub-states may be further forwarded to the access management client by the main state-machine.

Fig. 10 illustrates an exemplary block diagram according to an example embodiment of the invention. In particular, Fig. 10 illustrates some example functional elements of the reader device 110 and of the tags 130. The reader device 110 comprises a host 1010. The host may comprise an access management client. The host may further comprise a user interface such as a graphical user interface for allowing a user to control the operation of the reader device 110. The host 1010 is communicatively connected to a communication engine that comprises a controller 1020 such as a central processing unit (CPU), master processing unit (MPU), digital signal processor (DSP), an application specific integrated circuit (ASIC), a field programmable gate array, a microcontroller or a combination of such elements.

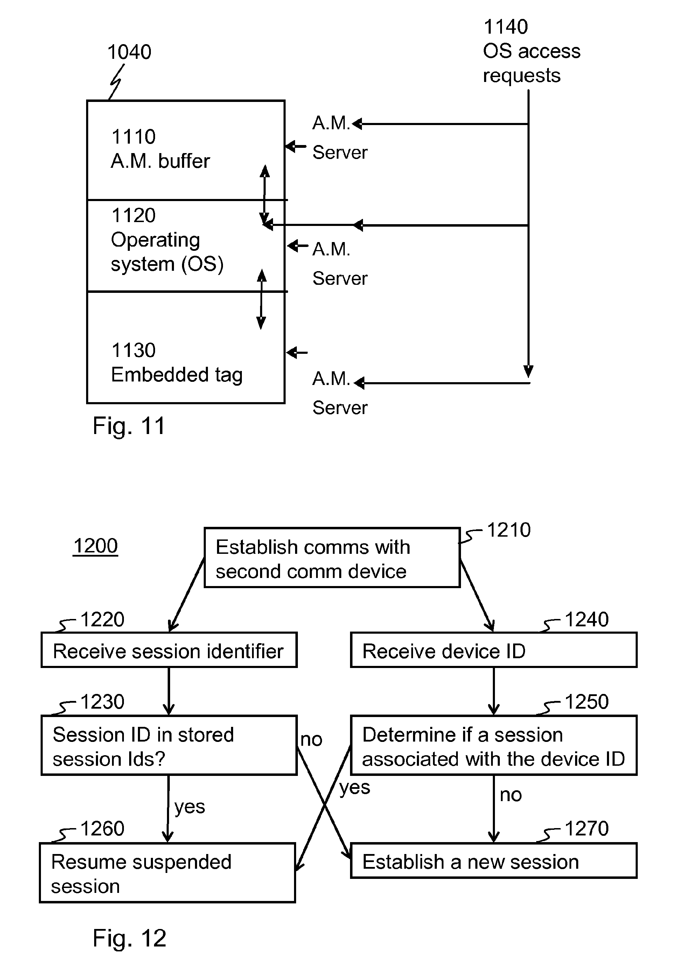

The controller 1020 operates according to instructions or software stored in a memory 1040. The structure of the memory 1040 is further described with reference to Fig. 11 in the following.

The controller may comprise software or dedicated hardwired circuitry to provide also following functions: an access management server 1030, a Media Access Control (MAC) protocol layer functionality 1050 and a physical layer functionality 1060.

A set of identifiers 1070 exchanged between the reader device and the tag is shown. The identifiers involve a session ID for each session and a tag ID that may correspond to a physical identifier of the tag in question. The session ID may not be exchanged with each message between the reader device and the tag, but instead be maintained by a higher layer (e.g. by the access management server). Fig. 11 illustrates an example embodiment for an access management server memory address space architecture. Fig. 11 shows the reader device 110 and the tag memory module 130 containing a memory block for accessing by the reader.

In the reader device 110, a non-volatile candidate memory (NVCM) may be implemented as a Phase-change memory (PCM), which stores an access management buffer 1110 that serves as an over-the-air part of the memory to exchange data via a wireless (e.g. ultrawide band, UWB) link with the tag 130 which may also include an access management server including an embedded tag memory module 1130. In the reader device 110, the PCM memory stores also a memory address space 1120 accessible by the operating system (OS). In the reader device 110, the memory 1040 also stores a particular memory address space accessible as an embedded tag 1130 in the reader. The embedded tag 1130 may be provided to allow other readers to access the embedded tag 1130 stored data as if it were an ordinary tag 130. The memory of the reader device 110 connects through the media access control (MAC) layer and physical radio frequency (PHY(RF)) layer to the non-volatile memory of the tag 130 memory module 1130 through its MAC and PHY(RF) layers.

When the operating system of the reader sends different memory access requests 1140 to the memory 1040 of the reader, the requests typically are relayed to appropriate part of the memory by the access management server. However, if the operating system should recall different parts of the operating system (such as program libraries), these requests may flow directly to the memory address space 1120 that is accessible by the operating system. It is notable that the access management server has an access to each of the memories or memory areas illustrated in Fig. 11, and can dynamically adjust the size and allocation of those memory areas according to the actual system status and needs.

Generally, in identification of a session, there may be following identifiers (IDs) available:
- Universal device ID (or MAC address) for identification of a particular device (readers and tags)
- Shortened ID i.e. taglD can be used during physical level communication to reduce overhead in comparison to the universal device ID
- Negotiated session ID to identify sessions. The session ID may be negotiated and used on higher layers (such as access management server), but not necessarily on the physical layer.

The session ID may be defined in different ways for different set-ups.
- Session ID may be very short if part of device IDs is used to detect "familiar" devices and to check active sessions -> resume if any exists on the list
- If more than two devices exist per session and there is a long expiration time for a session, a longer session ID is needed and there are more complex situations likely to arise.

Also the mode of the session affects the ID length needed to define sessions uniquely:
• Simple point-to-point maintenance in reader: tag ID + few bits defines the session
• Multi-point session: "universal" long session ID needed
Table 1 shows different parameters that are used in particular example embodiments of the invention.

**Table 1 sample parameters**

| Parameter | Format | description |
|---|---|---|
| **DeviceID** | | |
| | | Tag identifier, may include |
| TagID | | multiple tags Current host device or device |
| HostID | | group |
| Visitors allowed | | |
| | | |

| **Session parameters:** | | |
|---|---|---|
| SessionID | | identifies the session how to allocate and access |
| Session memory table | | memory |
| Security Level | | level of encryption / protection session may be initiated with lower security level but resumed with higher one, if session |
| Security flag | | suspended Session duration calculated cumulatively the successfully executed transactions = |
| Session duration | | successful transaction durations total number of transaction in one |
| number of transactions | | session |
| status | | the current transaction |
| Starting time | | Starting time of the session |
| | | |

| **Transaction parameters:** | | |
|---|---|---|
| Transaction duration | | one shot timer = timestamp |
| Direction of transfer (R/W) | | for one transaction unity |
| Address space accessed | | for one transaction unity |
| pointer to current address | | for one transaction unity |
| | | |

| **Extra:** | | Content linked to the session, |
|---|---|---|
| Metadata | data structure | metadata for OVI service list of executed transactions, what |
| Session log | data structure common data | has been done Starting location or previous location (e.g. enabling the OVI |
| Location | module | service), places |
| People | common data module | includes access rights of data what is accessed and the type of the accesses real time status for A.M. server, |
| Error codes | | MAC etc. |

It is appreciated that the transactions or some of the transactions identified by their parameters in the preceding table may take place for a number of times during one data session.

In the foregoing, various references have been made to the access management clients and servers. These entities may be used to maintain session information concerning ongoing and suspended sessions. In some embodiments of the invention, the session information is maintained in one or more of:
1. Default: reader device stores session information (the reader device has typically more capacity than tags, no intelligence required from tags)
   - Access management server in the reader maps the tagIDs to sessionIDs
2. More sophisticated case: tag device maintains session data. It is appreciated that while present tags typically have restricted intelligence, the development of electronics constantly increases possible capacity of the tags
   - Both devices are aware of session logs and parameters
   - At the minimum MAC layer of tag handles but a tag may also contain access management server (some functions or more complete functions)
3. Yet more sophisticated case: smart-space (sessions shared over devices)
   - SessionIDs used as parameters on higher layers of dynamic run time environment with coarse grained interoperable software modules which are used as building blocks for applications, such as smart-space environment (Spaces/Agents). In other words, the smart-space applications may refer to sessions through requests by using access management client functionality.
   - SessionIDs can be used to more complex multi-tag and reader sessions

As was mentioned in the foregoing, the session ID may not be transferred in every physical layer packet to reduce overhead. The session may be negotiated on higher level
- Reader: in access management server
- Tag: in MAC layer

In some example embodiments, sessions can be formed between tags making use of the power of radio signals sent by a reader device. Three such embodiments are introduced in the following.

In a first tag-to-tag session embodiment representing e.g. a "copy content" case, a reader device sets up a multi-tag session and transfers a block of data from tag T1 to tag T2 so that the reader first reads the block from T1 and then writes to T2. Then, the procedure is repeated block by block until all the content/files are transferred. It is appreciated that the tags may be powered simultaneously or consecutively. It is yet useful to understand that the session defines the control procedure and maintains the status of the data transfer between the tags. It is also appreciated that in some embodiments, the communication between the reader devices and tags may enable simultaneous reading of data from one tag and writing to another tag. In such a case, the writing of an earlier read block and reading of a new block may be performed in parallel.

In another tag-to-tag session embodiment, the reader sets up a tag-to-tag session by first starting a session with T1 (for example defined as a source) and T2 (defined as a sink). The reader only maintains two "copy content" sessions with small amount of control data. In this embodiment, all the involved devices know their roles in the current session.

In yet another tag-to-tag session embodiment, the tags are capable of initiating sessions by themselves. In this case, the data may be transferred by mobile reader devices (or by tags) after they have communicated with other tags (note: the tags may not reside within powering range of a reader device at the same time). It is also possible that there are multiple readers R2 that are collecting/broadcasting the data for a tag (multiple readers are attending a session). Such a system may be considered as a dynamic run time environment with coarse grained interoperable software modules which are used as a building blocks for applications, such as a smart-space system.

In any of the example tag-to-tag session embodiments described in the foregoing, either or both tags of a session may store the session identifier and optionally also the state of the session. Fig. 12 shows an example process 1200 according to an example embodiment of the invention. In particular, Fig. 12 illustrates forming of, or resuming, of a session by a first device with a proximate second device. The first device may be a reader device or a wirelessly powered communication device. The second device may be a reader device or a wirelessly powered communication device.

In general, when a first device forms a session with a second device, the first device establishes communications 1210 with the second device, either directly or via another device. The first device may then check if there is a session with the second communication device. This may take place so that the first device receives 1220 a session identifier from the second communication device and compares 1230 the received session identifier to the session identifier stored by the first device. Alternatively, the first device may receive a device identifier 1240 of the second communication device and determine 1250 whether the first device has an existing session associated with the received device identifier. If it is found that there is a suspended session with the second communication device, the first device resumes 1260 the suspended session (and the first device may send the session identifier to the second communication device). Otherwise, when no suspended session is found, the first device establishes 1270 a new session with the second communication device.

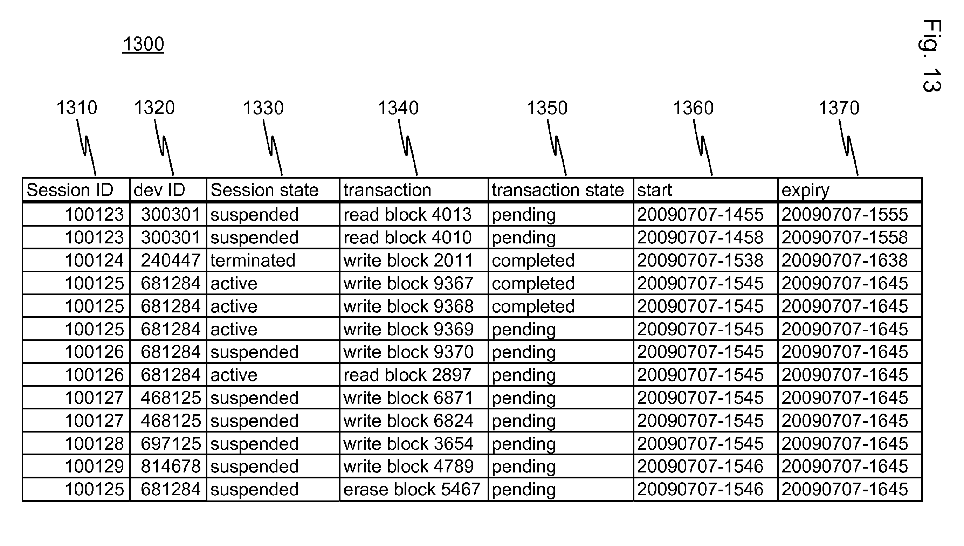

Fig. 13 shows an example of a session log 1300 according to an example embodiment of the invention. The session log may store various data concerning present and past sessions of the first device with other devices. These data may comprise, for instance, a session identifier 1310, a device identifier 1320 (such as a MAC address of the device), session state 1330, transaction description 1340, transaction state 1350, start time 1360 and expiry time 1370. The first device may be configured to schedule its future sessions and transactions based on the session log. For instance, the first device may prioritize sessions with fewer transactions so as to complete as many sessions as possible while the communications is possible (i.e. communicating devices are within the mutual communication range). In other examples, the first device may prioritize sessions with more transactions in order to sustain higher data throughput, sessions with higher data transfer rate (i.e. to communicate with most proximate devices or over fastest links) e.g. to provide good user experience. Yet further, the prioritizing may be based on the time so that the transactions are processed in the first in - first out order or first in - last out order.

Fig. 13 also demonstrates that a number of sessions may be pending between two communication devices in varying states and with different transactions. For instance, Fig. 13 shows a number of different transactions with session identifier 100125 and session number 100126 amidst different transactions in the session 100125. Both sessions 100125 and 100126 in this example are formed with common communication device.

In Fig. 13, the expiry time 1370 is set to one hour from the start of the session just to show one example. It is seen that later transactions may have a later start time but yet the session is set to expire simultaneously throughout one session. This is an example embodiment that may simplify the management of sessions. Alternatively, the sessions are not associated with a session-specific expiry time, but instead the expiry time is specific to each transaction. Different types of transactions may also have different expiry times. For instance, a read transaction may have a longer validity period i.e. the expiry time may be recorded further away in time from the start time than with a write transaction (or than with an erase transaction).

In an example embodiment of the invention, an access management client (i.e. an application) may also request the session information from the access management server and forward the session information over an out-of-band connection the details about the sessions (and other information about tags) to other active devices also running access management clients. The out-of-band connection may be, for instance, a cellular connection, Bluetooth connection, or an Infrared connection. This example embodiment may enable a reader device to share information concerning sessions with other reader devices. The sharing may be performed from an initiative by the sharing reader device, based on a request from another device, or based on a request of an operator or administrator of a given network or user group.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention. For instance, it is understood that any processing functions described in this document may be performed using software or hardwired circuitry as a matter of implementation.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method comprising:
establishing communications with a proximate wirelessly powered communication device;
forming a session with the proximate wirelessly powered communication device;
communicating in the session with the wirelessly powered communication device; and
maintaining a state of the session.

2. A method according to claim 1, wherein the forming of the session comprises storing a set of session parameters for the duration of the session and updating the stored session parameters according to detected changes in the session.

3. A method according to claim 2, wherein the session parameters comprise one or more parameters selected from a group consisting of: session identity, device identity of the wirelessly powered device, security level indication, session log indicative of transactions carried during the session, direction of transfer of a transaction, address space accessed in a transaction, and pointer to current address.

4. A method according to any one of the preceding claims, further comprising transmitting a wireless signal to detect proximate wirelessly powered communication devices.

5. A method according to any one of the preceding claims, further comprising suspending of the session responsive to any one of the following: a suspend request from a user; suspend request from an application that uses the method of claim 1; battery level of a user device running the method of claim 1 meeting a predetermined low limit; and losing connection with the wirelessly powered communication device.

6. A method according to any one of the preceding claims, wherein the method further comprises terminating the session responsive to meeting a termination trigger.

7. A method according to any one of the preceding claims, wherein the method further comprises maintaining a session identity for each ongoing session.

8. An apparatus comprising:
a transceiver configured to communicate with proximate wirelessly powered communication devices; and
a processor configured to cause the apparatus to:
establish communications with a proximate wirelessly powered communication device;
form a session with the proximate wirelessly powered communication device;
communicate in the session with the wirelessly powered communication device; and
maintain a state of the session.

9. An apparatus according to claim 8, wherein the processor is further configured to cause the apparatus to perform the method according to any one of claims 2 to 7.

10. An apparatus according to claim 8 or 9, wherein the apparatus is configured to obtain operating power at least for the transceiver from a proximate wirelessly powering communication device.

11. A computer readable memory medium comprising a computer program that contains computer readable program code adapted to perform the method of any one of claims 1 to 7 when said program is run on a computer.

12. An apparatus comprising:
a transceiver configured to obtain operating power from received wireless signals;
a processor configured to control the operation of the apparatus, the processor being configured to cause the transceiver to establish communications with a proximate wireless communication device;
the processor being further configured to cause the apparatus to form a session with the proximate wireless communication device and to exchange with the proximate wireless communication device a session identifier, the session identifier identifying said session; and
a memory configured to maintain the session identifier.

13. An apparatus according to claim 12, wherein the processor is configured to determine whether there is a suspended session with the proximate wireless communication device based on the received session identifier, wherein:
when there is a suspended session with the proximate wireless communication device, resuming the suspended session; and,
when there is no suspended session with the proximate wireless communication device, establishing a new session with the proximate wireless communication device.

14. A method comprising:
obtaining operating power at least for communications from wireless signals;
establishing communications with a proximate wireless communication device;
forming a session with the proximate wireless communication device and exchanging with the proximate wireless communication device a session identifier, the session identifier identifying said session; and
maintaining the session identifier.

15. A computer program stored in a computer readable memory medium, the computer program comprising computer executable program code configured to cause a, when executed by a computer, the computer to:
obtain operating power for communications from wireless signals;
establish communications with a proximate wireless communication device;
form a session with the proximate device and receive a session identifier, the session identifier identifying said session; and
maintain the session identifier.
